# EUROPEAN PATENT SPECIFICATION

(11) **EP 0 751 070 B1**
(45) Date of publication and mention of the grant of the patent: **11.04.2001**
(21) Application number: 96113611.6
(22) Date of filing: 19.02.1993
(51) Int. Cl.: B65B 63/04

(54) **A machine for rolling-up flat objects**
Maschine zum Aufrollen von flachen Gegenständen
Machine pour enrouler des objets plans

(43) Date of publication of application: 02.01.1997
(62) Divisional of application: 93102694.2
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Ferrero, Pietro, 1640 Rhode-St-Genese (BE)
(74) Representative: Rambelli, Paolo

(56) References cited:
- EP-A- 0 161 357
- FR-A- 2 624 053
- US-A- 4 285 750
- US-A- 4 959 109

## Description

The present invention relates to machines for rolling up laminar bodies.

In particular, the invention is intended to enable laminar bodies to be rolled up in order to form cylindrical or tubular bodies as a result of the rolling.

The invention has been developed with particular attention to its possible use in automatic packaging lines for products such as, for example, food products. In a particularly advantageous form of use, the machine according to the invention may be used to roll up automatically, at a high speed and with great precision, sheets representing instructions or information to be inserted in cylindrical containers such as, for example, containers for housing small toys which in turn are intended to be inserted as "surprises" in food products such as chocolate eggs and the like.

However, the invention has a very wide range of possible applications. In particular, it may be used for automatically producing cylindrical wrappers for containing various products, from laminar bodies.

Specifically, the present invention relates to a machine according to the preamble of claim 1, which is known e.g. from EP-A-0 161 357.

The object of the present invention is essentially to make the rolling action as rapid and precise as possible; this factor assumes considerable importance when the invention is used in an industrial field, and also in view of the fact that the rolled material (which, typically, is constituted by sheets of paper printed on one or both faces) tends to be quite slippery and deformable. In that respect, also FR-A-2 624 053, showing how tubes can be manufactured by rolling sheets is of some interest for the invention.

According to the present invention, this object is achieved by virtue of a machine having the further specific characteristics set forth in claim 1.

The invention will now be described, purely by way of nonlimiting example, with reference to the appended drawings, in which:
Figure 1 is a general perspective view of a machine formed according to the invention,
Figure 2 is a section taken on the line II-II of Figure 1,
Figure 3 is a section taken on the line III-III of Figure 2, and
Figures 4 to 8 show schematically the operating sequence of a machine according to the invention.

In the drawings, a machine for automatically rolling up laminar bodies constituted, in the embodiment illustrated, by generally elongate sheets or labels F, is generally indicated 1. In the embodiment illustrated, the sheets or label F are constituted by elongate rectangular strips of paper one or both faces of which are printed with wording such as, for example, instructions for the assembly of a small toy (not shown) which is intended to be inserted in a container (known as a "barrel"). The containers is in turn intended to be inserted in a hollow food product such as chocolate egg or the like.

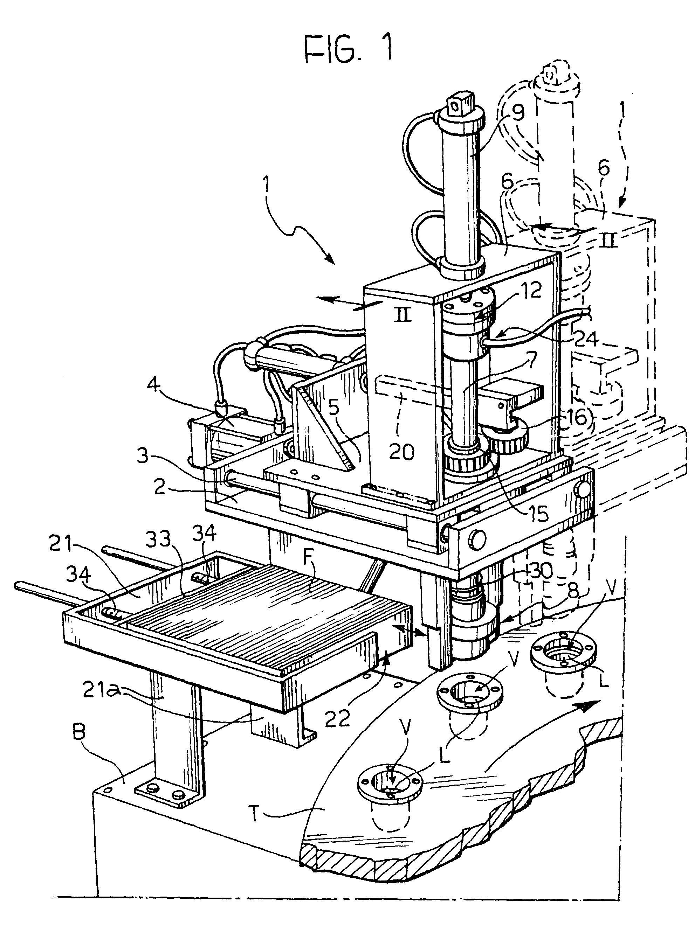

In the specific embodiment, the machine 1 is associated with equipment for automatically packing such containers or barrels. The equipment is not illustrated as a whole; however, an element of the equipment in question is visible in at least some of the drawings, and is constituted by a circular table T which is rotatable in steps about a respective vertical axis and which, around its periphery, has cells V in which the lower, generally bowl-shaped portions L of the containers or barrels are disposed in use (see Figures 1, 4, 5, 6 and 8 in particular). The container or barrel is constituted, in practice, by two complementary cup- or bowl-shaped bodies which can be connected to each other so as to produce a hollow casing having approximately the shape and size of a silkworm cocoon.

In the specific embodiment, the sheet or label F has to be rolled up so as to form a tubular or cylindrical body which can be inserted in the body L without obstructing it, that is, in practice, it is necessary to ensure that the label or sheet L which is rolled up to form a cylinder is disposed close to the perimetral wall of the body L without obstructing the subsequent introduction of articles (for example, the pieces forming a small toy to be assembled) into the body L.

In a preferred embodiment of the invention (see Figure 1 in this connection) the machine 1 usually comprises two paired stations disposed side by side as shown schematically in Figure 1, in which the profile of one of the two paired machines is shown schematically in broken outline.

This arrangement enables two sheets F to be rolled up simultaneously and the cylindrical bodies thus produced also to be inserted simultaneously in two cup-shaped bodies L disposed in two respective cells beneath the rotary table T. In practice, the two paired stations 1 are identical and may have one or more operating members in common.

The present description is given with reference to only one of the paired machines, it being understood that the machine paired therewith is either identical or specularly symmetrical thereto.

In general, the machine 1 is supported on a bracket-like structure 2 which is fixed on a stand or support bench which, in the embodiment illustrated, is the bench B of the packing equipment on which the table T is rotatably mounted.

Two horizontal guides 3 are oriented radially with respect to the table T above the bracket-like element 2. A movable device constituted essentially by a support table 5 which supports a portal structure 6 is mounted for sliding to and fro along the guides 3 under the action of a pneumatic jack 4. The portal structure 6 in turn acts as a support structure for a column 7 the lower end of which carries a head 8 which projects below the plane of the bracket 2 and constitutes the active element for acting on the sheets or labels F.

In particular, the column 7 is mounted on the table 5 and on the portal structure 6 with a dual movement capability.

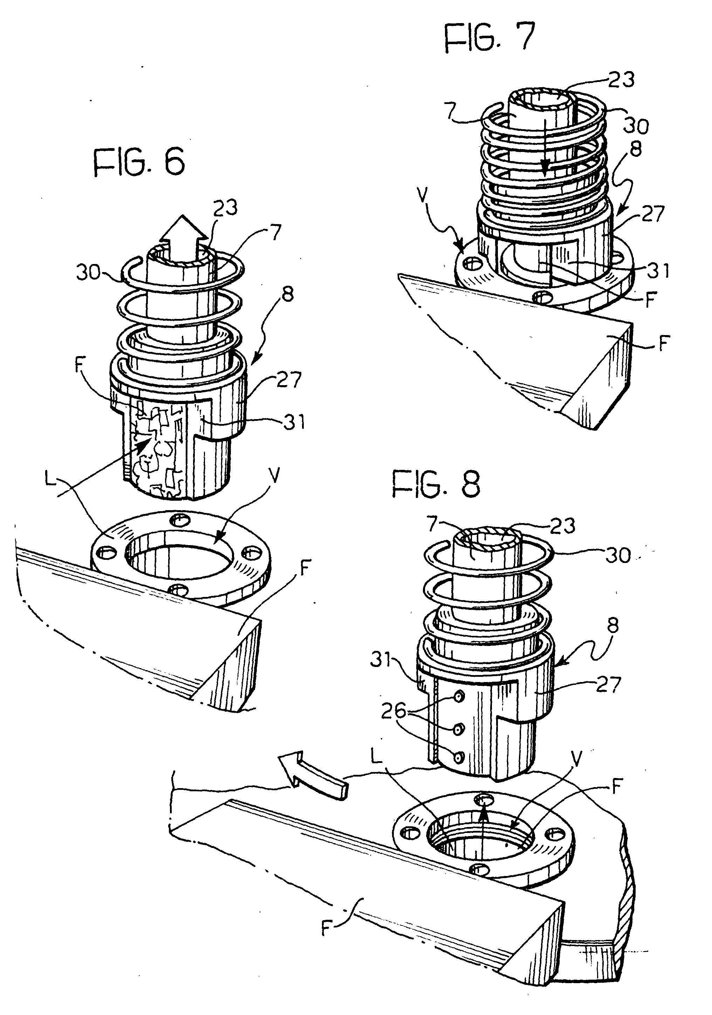

In the first place, the column 7 is movable vertically, under the action of a further pneumatic jack 9, between a raised position (shown, in particular, in Figures 1 to 6 and 8), and a lowered position shown, in relation to the head 8 alone, in Figure 7.

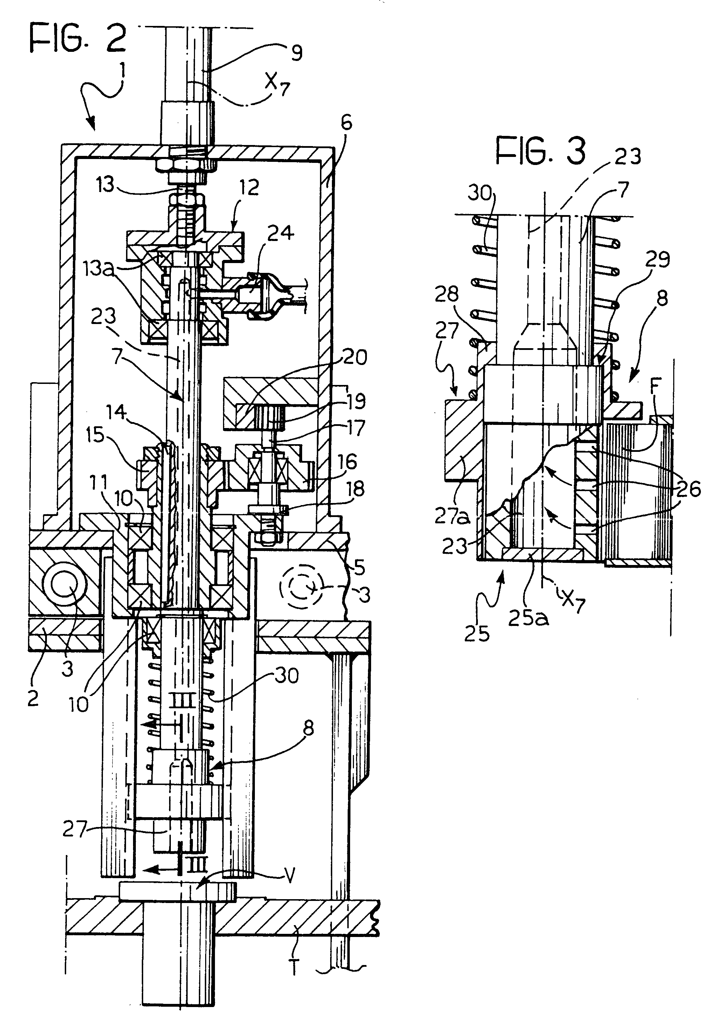

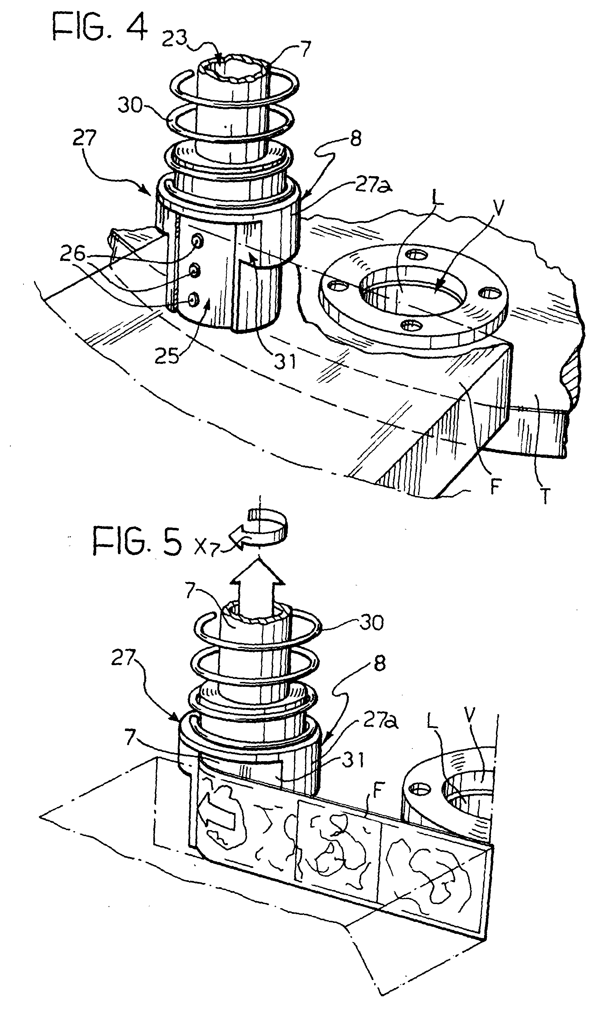

Moreover, the column 7 can also rotate about its own principal vertical axis X7 (see Figures 2 and 3 in particular).

This dual movement capability is achieved essentially by:
- the mounting of the column 7 on the table 5 with the interposition of a set of bearings 10 (usually several superposed bearings disposed within and beneath a cup-shaped structure 11 which is open upwardly and is fitted in a corresponding hole in the table 5) which leave the column 7 free to slide vertically within them, and
- the insertion of the upper end of the column 7 in a support element 12 which is also cup-shaped, the base of which is fixed to the rod 13 of the jack 9 and the downwardly-facing mouth of which houses the upper end of the column 7 with the interposition of further bearings 13a. The bearings on the one hand permit the column 7 to rotate freely about its vertical axis X7 and, on the other hand, cooperate with a narrow portion of the top of the column 7 to restrain the column 7 vertically.

In other words, although the column 7 is rotatable, it is restrained in a generally suspended condition by the cup-shaped element 12. The lowering and raising movements of the cup-shaped element 12, brought about by the operation of the jack 9, are therefore transmitted in an identical manner to the column 7 as a whole and, in particular, to the head 8 at the lower end of the column 7.

A gear 15, the axis of rotation of which coincides with the principal axis X7 of the column 7, is keyed to the intermediate portion of the column 7 with a certain ability to slide axially due to the presence of a groove 14, which is also axial, in the intermediate portion of the column 7 (that is, approximately in the portion of the column which is housed in the set of bearings 10). The gear 15, which is fixed for rotation with the column 7, meshes with a further gear 16, also with a vertical axis, keyed to a shaft 17 which extends vertically beside a certain portion of the column 7. The lower end of the shaft 17 is fitted in a support 18 carried by the table 5 and its upper end carries a pinion 19 which in turn is intended to mesh with a rack 20 extending horizontally through the portal structure 6.

The rack 20 is kept in a fixed position relative to the bracket 2 (by bracket means not shown).

The reciprocating motion of the table 5 and the portal structure 6 along the guides 3 brought about by the jack 4 therefore causes a corresponding translatory rolling motion of the pinion 19 along the rack 20. The rotation of the pinion 19 is transmitted, by means of the gear 16, to the gear 15 and hence to the column 7.

As a result of this arrangement, when the table 5 leaves its most retracted position (this expression meaning the position in which the table 5 - and all the elements carried thereby, including the column 7 - is in the position radially most remote from the table T) in order to advance towards the table T under the action of the jack 4, the drive-transmission process effected by the elements 15 to 20 causes the column 7 and the head 8 to rotate, performing a certain angular movement about the axis X7. The extent of this angular movement (which, as will be seen, is related to the lengths of the sheets or labels F to be rolled up) may be determined selectively by altering the transmission ratio of the gearing constituted by the elements 15 to 20 and, in particular, by altering the transmission ratio of the gearing constituted by the gears 15 and 16.

Naturally, when the table 5 is retracted by the jack 4, the column 7 and the head 8 perform a further rotary movement, this time in the opposite sense, returning precisely to the angular position assumed at the start when the table 5 again reaches its most retracted position relative to the table T. As will become clearer from the following, this is the position in which it picks up the sheet or label F to be rolled up.

Still with reference to the sheets or labels F, it can be seen (see Figure 1 in particular) that these elements are housed in a box 21 supported on the bench B by one or more brackets 21a. The sheets or labels F form a parallelepipedal block within the box 21 in which the various sheets or labels F are disposed in an extended condition, close together in a pack with a corner of the pack (that is, an end portion of the sheet or label F which is in the first position in the pack) projecting towards the rotary table T and facing the head 8 through a window 22 at the corner of the box 21 which faces the head 8.

As can best be seen in the sectioned view of Figure 2, the column 7 has an axial cavity 23. At the upper end of the column 7, the cavity 23 communicates with a connector 24 connected to a pneumatic source (not shown) operating under vacuum. In practice, this is a suction device (of known type, such as a vacuum pump) which can create a subatmospheric pressure in the cavity 23.

The cavity 23 extends axially through the column 7 as far as the lower end of the column 7 which constitutes the active portion 25 of the head 8.

This active portion is constituted by the end portion of the column 7, which is closed at its lower end by a wall 25a but has an array (usually constituted by a vertical column) of radial holes 26. These holes extend through the wall of the column 7 putting the cavity 23 into communication with the exterior of the column 7.

The holes 26 are preferably shaped like suction cups (with flared mouths facing outwardly) and can thus act as elements for gripping the sheets or labels F pneumatically in the manner shown in greater detail in Figure 3.

In practice, as a result of the vacuum applied to the interior of the cavity 23 through the connector 24, a certain air flow would be created from the lower end of the column 7 upwards through the cavity 23 through the holes 26 if they were left free.

If the holes 26 are blocked by a body applied to the exterior of the column 7 (in the specific embodiment, a sheet or label F) this air flow is prevented and the body F blocking the holes 26 is held, by a pneumatic effect, against the lower end of the column 7 which is surrounded by the skirt portion of a cowl 27 shown in detail in Figures 4 and 6.

The cowl in question is constituted by a cup-shaped body fitted on the lower end of the column 7, which is slightly wider than the rest of the column, so that the cowl 27 does not fall downwards. In particular, above a central portion 27a, the cowl 27 has an upper rim 28 which bears on a shoulder 29 formed by the body of the column 7 (Figure 3). A restraining element such as a helical spring 30 fitted around the rim 28 acts between the cowl 27 and the lower portion of the cup-shaped structure 11 in which the bearings 10 are mounted (that is, against a portion which does not rotate with the column 7). The spring 30 thus ensures that the rotary movement of the column 7 is not transferred to the cowl 27 which thus remains in a fixed rotational position in space.

As can be seen in Figures 3 to 7, the skirt portion of the cowl 27, which is tubular, has a hole or window which in fact may be compared to the result of the virtual removal of a certain portion of the skirt corresponding to a circular sector of about 30^{o}-40^{o}. This is in the portion of the cowl 27 which is intended to face the box 21 housing the sheets or labels F.

In practice, the lower portion of the column 7 and, in particular, the portion with the holes 26, is uncovered and freely accessible from the exterior on the side on which the sheets or labels F are disposed. In particular, the hole in the skirt portion of the cowl 27 is formed in a manner such as to give rise to a bearing surface 31 which is tangential to the external surface of the lower portion of the column 7 (the portion indicated 25 in Figure 4).

In other words, the portion of the head 8 which faces the box 21 in which the sheets or labels F are disposed has (in correspondence with the corner of the pack of sheets or labels F which is left clear by the window 22 in the box 21) a generally T-shaped bearing surface, of which the central or stem portion is constituted by the portion of the column 7 with the holes 26, and the top portion, as well as two thin lateral portions of the stem are defined by the bearing surface 31.

The relative positions of the elements 15 to 20 and the travel of the table 5 are adjusted jointly so that, when the table 5 is in its most retracted position relative to the table T, the head 8 of the column 7 is close to the pack of sheets or labels F in correspondence with the window 22 (that is, in correspondence with a corner of the pack of sheets) with the holes 26 exactly facing the hole in the cowl 27 in a central position so as to bear against the surface of the sheet or label F occupying the first position in the pack housed in the box 21. The sheets are compacted and urged towards the head 8 by the action of a thrust element 33 which acts on the rear end of the pack in question under the resilient force of springs 34 acting between the thrust element 33 and the rear wall of tile box 21.

The operation of the machine according to the invention will be described, starting from the initial operating condition described above.

For precision, this is the condition shown in detail in Figures 3 and 4, in which:
- the jack 9 keeps the column 7 in the raised position with the active portion 8 of the column 7 and, in particular, the window in the cowl 27, located precisely at the height of the pack of sheets or labels F,
- the jack 4 keeps the table 5 in its most retracted position relative to the table T, so that the head 8 and, in particular, the suction-cup-like holes 26 in the lower portion of the column 7 are precisely opposite the pack of sheets or labels F in positions in which they bear against the sheet or label occupying the first position in the pack.

Moreover, it will be assumed that the suction source connected to the connector 24 is active thus maintaining a subatmospheric pressure in the cavity 23 in the column 7.

In these conditions, in practice, tile sheet F, one end of which bears against the holes 26, is gripped by the lower end of the column 7.

The jack 4 is then activated (by a general control device, for example, a PLC electronic controller - of widely known type), resulting in a forward movement of the table 5 and (by means of the gearing constituted by the elements 15 to 20) the consequent rotation of the column 7. The column 7 which rotates (whereas the cowl 27 remains in a fixed angular position) takes the sheet or label F with it, causing the sheet or label F to be rolled around and onto the column 7. This is all as shown schematically in Figure 5.

Moreover, as a result of the general forward movement of the table 5 on which the column 7 is mounted, the head 8 moves away from the box 21, removing the sheet or label F being rolled up from the pack in which it was previously disposed.

When the jack 4 has completed its forward travel bringing the table 5 to its furthest forward position on the guides 3, the column 7 has performed a certain angular movement (typically 2-4 turns) about its axis X7, winding the sheet F onto its lower end and thus forming a cylindrical or tubular body. This is held firmly in the space between the external surface of the column 7 and the internal surface of the skirt portion of the cowl 27. In short, this is the condition shown schematically in Figure 6.

The extent of the travel of the table 5 along the guides 3 (in practice, the length of the guides) as well as the relative position of the bracket 2 (on which the table 5 is slidable) and of the table T (in which the cells V are provided) are selected, together with the path of the stepped advance of the table T, in a manner such that, under the conditions described above, the column 7, onto the lower end of which the sheet F is wound, is precisely above one of the cells V in the table T, in which the cup-shaped body L constituting one of the portions of the barrel-like container into which the sheet F is to be introduced has previously been inserted (by known means, not shown).

At this point, the jack 9 is activated so as to lower the column 7 so that the head 8 enters the cell V. The entry of the head 8 into the cell V (Figure 7) initially involves both the column 7 and the cowl 27 mounted on its lower end.

However, the dimensions of the cowl and, in particular, the dimensions of its central portion 27a, are selected in a manner such that, whereas the column 7 with the label F wound on its lower end can enter the cell freely, only the edge of the cowl 27 enters, thus compressing the spring 30 axially.

As a result of the stoppage of the downward movement of the cowl 27 brought about by the reaction of its wider central portion 27a against the edge of the cell V, an axial retraction of the cowl 27 relative to the column 7, against the reacting force exerted by the spring 30, is superimposed on the movement of the lower end of the column 7 (and the sheet or label F wound thereon) into the cell V. In other words, this corresponds to a movement by which the rolled sheet F is expelled from the cowl 27.

In these conditions (by virtue of the intrinsic resilience of the material of which it is made), the rolled sheet released by the cowl 27 can loosen slightly and expand radially until it bears against the internal wall of the cup-shaped body L housed in the cell V.

When the jack 9 is activated again to return the column 7 upwardly, the sheet F therefore remains securely within the body L and the lower end of the column 7 can return upwardly with the cowl 27 which, under the action of the spring 30, resumes its initial position in which it covers the lower end of the column 7.

In these conditions, the jack 4 is activated again to return the table 5 to its most retracted position of Figures 3 and 4. This movement returns the table 5 backwards along the guides 3 whilst the column 7 performs a further rotary movement exactly identical (but, naturally, in the opposite sense) to that performed during its forward travel, during which the sheet F was rolled up

Naturally, during its return travel, the lower end of the column 7 does not carry a sheet element since the one which was previously rolled up has been deposited in the cell V.

Upon completion of its return travel, the initial operating conditions described above with reference to Figures 3 and 4 are re-established and the machine is ready to perform a new cycle to roll up a new sheet or label F. Naturally, this will be the sheet or label which in turn occupies the front position in the pack housed in the box 21, after the sheet or label previously rolled up has been removed.

The action of the vacuum source 24 may advantageously be interrupted (either by switching off the vacuum source, or even by cutting off the communication between the source and the cavity 23) during the deposition of the rolled sheet in the cell V (Figure 7) and during the subsequent return travel to the initial position. On the one hand, this is to prevent the suction exerted through the holes 26 impeding the deposition of the rolled sheet securely in the cell V and, on the other hand, to prevent a certain amount of noise due to the suction of the air through the holes 26 during the return travel towards the initial position.

Naturally, the principle of the invention remaining the same, the details of construction and forms of embodiment may be varied widely with respect to those described and illustrated, without thereby departing from the scope of the present invention as defined by the appended claims.

## Claims

1. A machine for rolling up laminar bodies (F) in order to form cylindrical or tubular bodies as a result of the rolling, comprising:
- a winding core (7) which can perform a rotary movement about its principal axis (X7),
- retention means (26) on the winding core for bringing about a connection by contact with the laminar bodies (F) to be rolled up, and
- reaction means (27) substantially coextensive with the portion of the winding core (7) in which the connection is brought about by contact with the laminar bodies (F) so that, as a result of the rotation of the winding core (7), the laminar bodies (F) are wound around the winding core (7), the reaction means (27) defining, with respect to the winding core, a chamber for the winding and for restraining the cylindrical or tubular bodies resulting from the rolling-up of the laminar bodies (F),
characterised in that the winding core (7) has an internal cavity (23) which can be brought to a subatmospheric pressure (24) and which communicates with the external surface of the winding core by means of holes (26) which can be brought into contact with the laminar bodies (F) so that the winding core (7) can pick up the laminar bodies by a general pneumatic gripping mechanism and in that means are provided for storing the laminar bodies (F) in the extended condition, the storage means being constituted essentially by a box-like structure (21) in which the laminar bodies (F) are arranged in the form of a pack, the box-like element having a window (22) generally facing the winding core (7) so that one end of each laminar body (F) can be gripped by the winding core (7).

2. A machine according to claim 1, characterised in that the winding core (7) is associated with:
- a device (5, 6) for supporting the winding core (7), which is mounted on the device so as to be rotatable relative thereto (10),
- an element (20) which causes rotation and is movable relative to the device (5), and
- gear means (15 to 19) interposed between the element (20) which causes rotation and the winding core in an arrangement such that the relative movement of the device (5) and of element (20) which causes rotation results in the rotation of the winding core (7) by means of the gear means (15 to 19).

3. A device according to claim 2, characterised in that the device (5, 6) is a movable device (3) and in that the element (20) which causes rotation is mounted in a generally fixed position relative to the movable device (3).

4. A device according to claim 2 or claim 3, characterised in that the element (20) which causes rotation is constituted by a rack.

5. A machine according to any one of claims 2 to 4, characterised in that the gear means (15 to 19) comprise at least one first gear (15) keyed to the winding core (7) and at least one second gear (16, 19) meshed with the element which causes rotation.

6. A machine according to any one of claims 2 to 5, characterised in that the gear means (15 to 20) are permanently meshed so that a reciprocal motion imparted (4) to the movable element (5) causes a corresponding reciprocal rotary motion of the winding core (7).

7. A machine according to any one of claims 2 to 6, characterised in that the winding core (7) is associated with at least one gear (15) which forms part of the gear means (15 to 19); the at least one gear (15) being mounted on the winding core (7) and fixed for rotation therewith, but slidable axially relative thereto, so that the winding core (7) can perform a general sliding movement along its principal axis (X7) relative to the gear means (15, 20).

8. A machine according to any one of the preceding claims, characterised in that:
- it has means (21) for storing the laminar bodies in an extended condition as well as means (V) for housing the cylindrical or tubular bodies resulting from the winding,
- the winding core (7) is associated with drive means (4) which can impart to the winding core (7) a general reciprocating motion between the storage means (21) and the housing means (V) as well as transmission means (15 to 19) so that the reciprocating motion determines, by virtue of the transmission means, a corresponding rotary motion of the winding core (7) and a consequent winding of the laminar bodies (F) around the winding core (7) during the movement of the winding core (7) between the storage means (21) and the housing means (V).

9. A machine according to claim 8, characterised in that the winding core (7) is associated with further drive means (9) which can cause the winding core (7) to travel axially along its principal axis (X7), the further drive means (9) being operable in coordination with the drive means (4) so that the winding core (7) cooperates with the storage means (21) in order to withdraw the laminar bodies (F) in a first axial position and subsequently to deposit the cylindrical or tubular bodies resulting from the winding in the housing means (V) after it has travelled axially along its principal axis (X7) under the action of the further drive means (9).

10. A machine according to claim 9, characterised in that the axial travel is a downstroke.

11. A machine according to claim 8 or claim 9, characterised in that the drive means (4) and/or the further drive means comprise pneumatic jacks (9).

12. A machine according to claim 1, characterised in that at least one pressure element (33) is associated with the box-like means (21) in order to consolidate the laminar elements (F) in the pack.

13. A machine according to any one of the preceding claims, characterised in that the winding core can form, with the laminar bodies (F), an adhesive connection oriented generally tangentially to the winding core (7), and in that the winding core (7) is associated with a cowl formation (27) which surrounds the winding core (7) at least partially so as to create a cylindrical space around the core (7) in which the laminar bodies (F) are rolled up and the cylindrical or tubular bodies are consequently formed, as a result of the rotation of the winding core (7) with the cowl formation (27) kept in a substantially fixed position.

14. A machine according to claim 13, characterised in that the cowl formation (27) has a skirt surface with a hole forming a window through which the laminar bodies (F) can come into contact with the rotary body (7).

15. A machine according to claim 14, characterised in that the window (25) is defined, within the cowl formation (27), by at least one surface (31) extending generally tangentially to the surface of the rotary body.

16. A machine according to claim 2 and any one of claims 13 to 15, characterised in that restraining means (30) are interposed between said device (5, 6) and the cowl formation (27) for preventing the cowl formation (27) from rotating during the rotation of the winding core (7).

17. A machine according to claim 16, characterised in that the restraining formation is formed generally like a spring (30).

18. A machine according to claim 8 and claim 13, characterised in that the housing means (V) are formed generally like cells (V) with respective mouth portions, and in that the cowl formation (27) has a wider portion (27a) with generally larger dimensions than those of the mouth portions of the cells (V), so that the cowl formation (27) can follow the movement of the winding core (7) into the cell until the wider portion (27a) reacts against the mouth portion of the cell (V) whilst the winding core (7) continues to travel into the cell (V), depositing the cylindrical or tubular body in the cell (V).

19. A machine according to any one of the preceding claims, characterised in that it comprises several identical units (1) in a paired arrangement.

## Patentansprüche

1. Maschine zum Aufrollen von flachen Gegenständen (F), um als Ergebnis des Aufrollens zylindrische oder röhrenförmige Körper zu bilden, mit:
- einem Wickelkern (7), welcher eine Drehbewegung um seine Hauptachse (X7) ausführen kann,
- Rückhaltemitteln (26) an dem Wickelkern zum Aufbau einer Verbindung durch Kontakt mit den flachen Gegenständen (F), die aufgerollt werden sollen, und
- Reaktionsmitteln (27), die sich im Wesentlichen in Richtung des Abschnitts des Wickelkerns (7) erstrecken, in welchem die Verbindung durch Kontakt mit den flachen Gegenständen (F) aufgebaut wird, so dass, als Ergebnis der Drehung des Wickelkerns (7), die flachen Gegenstände (F) um den Wickelkern (7) herumgewickelt werden, wobei die Reaktionsmittel (27) bezüglich des Wickelkerns eine Kammer zum Aufwickeln und zum Zurückhalten der zylindrischen oder röhrenförmigen Körper definieren, die sich aus dem Aufrollen der flachen Gegenstände (F) ergeben,
dadurch gekennzeichnet, dass der Wickelkern (7) einen inneren Hohlraum (23) hat, in dem ein subatmosphärischer Druck (24) erzeugt werden kann und der mit der Außenfläche des Wickelkerns mittels Öffnungen (26) in Verbindung steht, welche in Kontakt mit den flachen Gegenständen (F) gebracht werden können, so dass der Wickelkern (7) die flachen Gegenstände durch einen allgemeinen pneumatischen Greifmechanismus aufnehmen kann, und dass Mittel vorgesehen sind zum Aufbewahren der flachen Gegenstände (F) im ausgebreiteten Zustand, wobei die Lagermittel im Wesentlichen durch einen schachtelartigen Aufbau (21) gebildet werden, in welchem die flachen Gegenstände (F) in Form eines Stapels angeordnet sind, wobei das schachtelartige Element ein Fenster (22) hat, das im Allgemeinen dem Wickelkern (7) gegenüberliegt, so dass ein Ende jedes flachen Gegenstands (F) durch den Wickelkern (7) gegriffen werden kann.

2. Maschine nach Anspruch 1, dadurch gekennzeichnet, dass der Wickelkern (7) verbunden ist mit:
- einer Einrichtung (5, 6) zum Halten des Wickelkerns (7), welcher so an der Einrichtung angebracht ist, dass er relativ dazu drehbar ist (10),
- einem Element (20), das Drehung verursacht und relativ zu der Einrichtung (5) beweglich ist, und
- Getriebemitteln (15 bis 19), die zwischen dem Element (20), das Rotation verursacht, und dem Wickelkern so angeordnet sind, dass die relative Bewegung der Einrichtung (5) und des Elements (20), das Rotation verursacht, in der Rotation des Wickelkerns (7) mittels der Getriebemittel (15 bis 19) resultiert.

3. Einrichtung nach Anspruch 2, dadurch gekennzeichnet, dass die Einrichtung (5, 6) eine bewegliche Einrichtung (3) ist und dass das Element (20), das Rotation verursacht, in einer im Allgemeinen festen Position relativ zu der beweglichen Einrichtung (3) angebracht ist.

4. Einrichtung nach Anspruch 2 oder 3, dadurch gekennzeichnet, dass das Element (20), das Rotation verursacht, durch einen Rahmen gebildet wird.

5. Maschine nach einem der Ansprüche 2 bis 4, dadurch gekennzeichnet, dass die Getriebemittel (15 bis 19) zumindest ein erstes Zahnrad (15) beinhalten, das mit dem Wickelkern (7) verkeilt ist, und zumindest ein zweites Zahnrad (16, 19), das mit dem Element kämmt, das Rotation verursacht.

6. Maschine nach einem der Ansprüche 2 bis 5, dadurch gekennzeichnet, dass die Getriebemittel (15 bis 20) permanent kämmen, so dass eine Hin- und Herbewegung (4), die dem beweglichen Element (5) aufgeprägt ist, eine entsprechende hin- und hergehende Drehbewegung des Wickelkerns (7) verursacht.

7. Maschine nach einem der Ansprüche 2 bis 6, dadurch gekennzeichnet, dass der Wickelkern (7) mit zumindest einem Zahnrad (15) verbunden ist, das Teil der Getriebemittel (15 bis 19) ist; wobei das zumindest eine Zahnrad (15) an dem Wickelkern (7) angebracht und zur Drehung mit dem Wickelkern daran befestigt ist, aber axial relativ bezüglich des Wickelkerns gleiten kann, so dass der Wickelkern (7) eine allgemeine Gleitbewegung entlang seiner Hauptachse (X7) bezüglich der Getriebemittel (15, 20) durchführen kann.

8. Maschine nach einem der vorangehenden Ansprüche, dadurch **gekennzeichnet,** dass:
- sie Mittel (21) zum Lagern der flachen Gegenstände in ausgebreitetem Zustand sowie Mittel (V) zum Aufnehmen der zylindrischen oder röhrenförmigen Körper aufweist, die sich aus dem Aufwickeln ergeben,
- der Wickelkern (7) mit Antriebsmitteln (4) verbunden ist, die dem Wickelkern (7) eine allgemeine hin- und hergehende Bewegung zwischen dem Lagermittel (21) und dem Aufnahmemittel (V) aufprägen kann, sowie mit Übertragungsmitteln (15 bis 19), so dass die hin- und hergehende Bewegung mittels der Übertragungsmittel eine entsprechende Drehbewegung des Wickelkerns (7) und ein daraus folgendes Aufwickeln der flachen Gegenstände (F) um den Wickelkern (7) während der Bewegung des Wickelkerns (7) zwischen dem Lagermittel (21) und dem Aufnahmemittel (V) verursacht.

9. Maschine nach Anspruch 8, dadurch gekennzeichnet, dass der Wickelkern (7) mit weiteren Antriebsmitteln (9) verbunden ist, die eine axiale Bewegung des Wickelkerns (7) entlang seiner Hauptachse (X7) verursachen können, wobei die weiteren Antriebsmittel (9) in Koordination mit dem Antriebsmittel (4) betrieben werden können, so dass der Wickelkern (7) mit den Lagermitteln (21) zusammenarbeitet, um die flachen Gegenstände (F) in eine erste axiale Position zurückzuziehen und um anschließend die zylindrischen oder röhrenförmigen Körper, die sich durch das Aufwickeln ergeben, in dem Aufnahmemittel (V) unterzubringen, nachdem sie axial entlang ihrer Hauptachse (X7) unter dem Einfluss der weiteren Antriebsmittel (9) sich bewegt hat.

10. Maschine nach Anspruch 9, dadurch gekennzeichnet, dass die axiale Bewegung ein Hub nach unten ist.

11. Maschine nach Anspruch 8 oder 9, dadurch gekennzeichnet, dass die Antriebsmittel (4) und/oder die weiteren Antriebsmittel pneumatische Schieber (9) beinhalten.

12. Maschine nach Anspruch 1, dadurch gekennzeichnet, dass zumindest ein Druckelement (33) mit dem schachtelartigen Mittel (21) verbunden ist, um die flachen Elemente (F) in dem Stapel zu verfestigen.

13. Maschine nach einem der vorangehenden Ansprüche, dadurch gekennzeichnet, dass der Wickelkern mit den flachen Gegenständen (F) eine haftende Verbindung eingehen kann, welche im Wesentlichen tangential zu dem Wickelkern (7) orientiert ist, und dass der Wickelkern (7) mit einer Kappenanordnung (27) verbunden ist, die den Wickelkern (7) zumindest teilweise umgibt, um einen zylindrischen Raum um den Kern (7) herum zu bilden, in welchem die flachen Gegenstände (F) aufgerollt werden und in welchem so die zylindrischen oder röhrenförmigen Körper gebildet werden, als Resultat der Drehung des Wickelkerns (7), wobei die Kappenanordnung (27) in einer im Wesentlichen festen Stellung verbleibt.

14. Maschine nach Anspruch 13, dadurch gekennzeichnet, dass die Kappenanordnung (27) eine Saumfläche mit einer Öffnung hat, welche ein Fenster bildet, durch welche die flachen Gegenstände (F) in Kontakt mit dem sich drehenden Körper (7) gelangen können.

15. Maschine nach Anspruch 14, dadurch gekennzeichnet, dass das Fenster (25) innerhalb der Kappenanordnung (27) durch zumindest eine Fläche (31) definiert ist, welche sich im Wesentlichen tangential zu der Fläche des drehenden Körpers erstreckt.

16. Maschine nach Anspruch 2 und einem der Ansprüche 13 bis 15, dadurch gekennzeichnet, dass Rückhaltemittel (30) zwischen der Einrichtung (5, 6) und der Kappenanordnung (27) vorgesehen sind, um zu verhindern, dass sich die Kappenanordnung (27) während der Rotation des Wickelkerns (7) dreht.

17. Maschine nach Anspruch 16, dadurch gekennzeichnet, dass die Rückhalteanordnung im Wesentlichen wie eine Feder (30) ausgeformt ist.

18. Maschine nach Anspruch 8 und Anspruch 13, dadurch gekennzeichnet, dass die Aufnahmemittel (V) im Wesentlichen wie Zellen (V) mit entsprechenden Mundabschnitten ausgeformt sind, und dass die Kappenanordnung (27) einen breiteren Abschnitt (27a) mit im Allgemeinen breiteren Ausmaßen als die der Mundabschnitte der Zellen (V) hat, so dass die Kappenanordnung (27) der Bewegung des Wickelkerns (7) in die Zelle folgen kann, bis der breitere Abschnitt (27a) gegen den Mundabschnitt der Zelle (V) anstößt, während der Wickelkern (7) sich weiter in die Zelle (V) hineinbewegt und den zylindrischen oder röhrenförmigen Körper in der Zelle (V) ablegt.

19. Maschine nach einem der vorangehenden Ansprüche, dadurch gekennzeichnet, dass sie mehrere identische Einheiten (1) in paarweiser Anordnung beinhaltet.

## Revendications

1. Machine pour enrouler des corps en feuille (F) afin de former des corps cylindriques ou tubulaires en conséquence de l'enroulement, comprenant :
- un mandrin enrouleur (7) qui peut avoir un mouvement rotatif autour de son axe principal (X7),
- un moyen de retenue (26) sur le mandrin enrouleur pour créer une liaison par contact avec les corps en feuille (F) devant être enroulés, et
- un moyen de réaction (27) sensiblement dans l'extension de la partie du mandrin enrouleur (7) dans laquelle la liaison est créée par contact avec les corps en feuille (F) de manière que, en conséquence de la rotation du mandrin enrouleur (7), les corps en feuille (F) soient enroulés autour du mandrin enrouleur (7), le moyen de réaction (27) définissant, par rapport au mandrin enrouleur, une chambre pour l'enroulement et pour retenir les corps cylindriques ou tubulaires résultant de l'enroulement des corps en feuille (F),
caractérisée en ce que le mandrin enrouleur (7) comporte une cavité interne (23) qui peut être amenée à une pression négative (24) et qui communique avec la surface externe du mandrin enrouleur au moyen de trous (26) qui peuvent être amenés en contact avec les corps en feuille (F) de manière que le mandrin enrouleur (7) puisse prélever les corps en feuille par un mécanisme de saisie pneumatique général et en ce qu'un moyen est prévu pour stocker les corps en feuille (F) dans la condition étalée, le moyen de stockage étant constitué principalement par une structure en forme de boîte (21) dans laquelle les corps en feuille (F) sont disposés sous la forme d'un paquet, l'élément en forme de boîte comportant une fenêtre (22) donnant généralement sur le mandrin enrouleur (7) de manière qu'une extrémité de chaque corps en feuille (F) puisse être saisie par le mandrin enrouleur (7).

2. Machine selon la revendication 1, caractérisée en ce que le mandrin enrouleur (7) est associé à :
- un dispositif (5, 6) pour supporter le mandrin enrouleur (7), qui est monté sur le dispositif de manière à pouvoir tourner (10) relativement à celui-ci,
- un élément (20) qui produit une rotation et est mobile relativement au dispositif (5), et
- un moyen d'engrenage (15 à 19) disposé entre l'élément (20) qui produit une rotation et le mandrin enrouleur en un agencement tel que le mouvement relatif du dispositif (5) et de l'élément (20) qui produit une rotation aboutit à la rotation du mandrin enrouleur (7) au moyen du moyen d'engrenage (15 à 19).

3. Dispositif selon la revendication 2, caractérisé en ce que le dispositif (5, 6) est un dispositif mobile (3) et en ce que l'élément (20) qui produit une rotation est monté dans une position généralement fixe relativement au dispositif mobile (3).

4. Dispositif selon la revendication 2 ou la revendication 3, caractérisé en ce que l'élément (20) qui produit une rotation est constitué par une crémaillère.

5. Machine selon l'une quelconque des revendications 2 à 4, caractérisée en ce que le moyen d'engrenage (15 à 19) comprend au moins un premier engrenage (15) calé sur le mandrin enrouleur (7) et au moins un deuxième engrenage (16, 19) en prise avec l'élément qui produit une rotation.

6. Machine selon l'une quelconque des revendications 2 à 5, caractérisée en ce que le moyen d'engrenage (15 à 20) est en prise permanente de manière qu'un mouvement réciproque communiqué (4) à l'élément mobile (5) produise un mouvement de rotation réciproque correspondant du mandrin enrouleur (7).

7. Machine selon l'une quelconque des revendications 2 à 6, caractérisée en ce que le mandrin enrouleur (7) est associé à au moins un engrenage (15) qui fait partie du moyen d'engrenage (15 à 19) ; ledit au moins un engrenage (15) étant monté sur le mandrin enrouleur (7) et fixé pour rotation avec lui, mais adapté à glisser axialement relativement à lui, de manière que le mandrin enrouleur (7) puisse avoir un mouvement de glissement général le long de son axe principal (X7) relativement au moyen d'engrenage (15, 20).

8. Machine selon l'une quelconque des revendications précédentes, caractérisée en ce que :
- elle comporte un moyen (21) pour stocker les corps en feuille dans une condition étalée ainsi qu'un moyen (V) pour loger les corps cylindriques ou tubulaires résultant de l'enroulement,
- le mandrin enrouleur (7) est associé à un moyen d'entraînement (4) qui peut communiquer au mandrin enrouleur (7) un mouvement alternatif général entre le moyen de stockage (21) et le moyen de logement (V) ainsi qu'un moyen de transmission (15 à 19) de manière que le mouvement alternatif détermine, grâce au moyen de transmission, un mouvement de rotation correspondant du mandrin enrouleur (7) et un enroulement résultant des corps en feuille (F) autour du mandrin enrouleur (7) durant le mouvement du mandrin enrouleur (7) entre le moyen de stockage (21) et le moyen de logement (V).

9. Machine selon la revendication 8, caractérisée en ce que le mandrin enrouleur (7) est associé à un moyen d'entraînement supplémentaire (9) qui peut amener le mandrin enrouleur (7) à se déplacer axialement le long de son axe principal (X7), le moyen d'entraînement supplémentaire (9) étant adapté à fonctionner en coordination avec le moyen d'entraînement (4) de manière que le mandrin enrouleur (7) coopère avec le moyen de stockage (21) afin d'extraire les corps en feuille (F) dans une première position axiale puis de déposer les corps cylindriques ou tubulaires résultant de l'enroulement dans le moyen de logement (V) après son déplacement axial le long de son axe principal (X7) sous l'action du moyen d'entraînement supplémentaire (9).

10. Machine selon la revendication 9, caractérisée en ce que le déplacement axial est une course descendante.

11. Machine selon la revendication 8 ou 9, caractérisée en ce que le moyen d'entraînement (4) et/ou le moyen d'entraînement supplémentaire comprennent des vérins pneumatiques (9).

12. Machine selon la revendication 1, caractérisée en ce qu'au moins un élément de pression (33) est associé au moyen en forme de boîte (21) afin de comprimer les corps en feuille (F) dans le paquet.

13. Machine selon l'une quelconque des revendications précédentes, caractérisée en ce que le mandrin enrouleur peut former, avec les corps en feuille (F), une liaison par adhérence orientée généralement tangentiellement au mandrin enrouleur (7), et en ce que le mandrin enrouleur (7) est associé à un pavillon (27) qui entoure le mandrin enrouleur (7) au moins en partie pour créer un espace cylindrique autour du mandrin (7) dans lequel les corps en feuille (F) sont enroulés et les corps cylindriques ou tubulaires sont ensuite formés, en conséquence de la rotation du mandrin enrouleur (7) avec le pavillon (27) maintenu dans une position sensiblement fixe.

14. Machine selon la revendication 13, caractérisée en ce que le pavillon (27) comporte une surface de jupe avec un orifice formant une fenêtre par laquelle les corps en feuille (F) peuvent venir en contact avec le corps rotatif (7).

15. Machine selon la revendication 14, caractérisée en ce que la fenêtre (25) est définie, au sein du pavillon (27), par au moins une surface (31) s'étendant généralement tangentiellement à la surface du corps rotatif.

16. Machine selon la revendication 2 et l'une quelconque des revendications 13 à 15, caractérisée en ce qu'un moyen de retenue (30) est disposé entre ledit dispositif (5, 6) et le pavillon (27) pour empêcher le pavillon (27) de tourner durant la rotation du mandrin enrouleur (7).

17. Machine selon la revendication 16, caractérisée en ce que le moyen de retenue se présente généralement sous la forme d'un ressort (30).

18. Machine selon la revendication 8 et la revendication 13, caractérisée en ce que les moyens de logement (V) sont formés généralement comme des alvéoles (V) avec des parties d'ouverture respectives, et en ce que le pavillon (27) comporte une partie plus large (27a) avec des dimensions généralement plus grandes que celles des parties d'ouverture des alvéoles (V), de manière que le pavillon (27) puisse suivre le mouvement du mandrin enrouleur (7) dans l'alvéole jusqu'à ce que la partie plus large (27a) réagisse contre la partie d'ouverture de l'alvéole (V) tandis que le mandrin enrouleur (7) continue de se déplacer dans l'alvéole (V), déposant le corps cylindrique ou tubulaire dans l'alvéole (V).

19. Machine selon l'une quelconque des revendications précédentes, caractérisée en ce qu'elle comprend plusieurs unités identiques (1) appariées.
